# EUROPEAN PATENT APPLICATION

(11) **EP 3 958 441 A1**
(43) Date of publication of application: **23.02.2022**
(21) Application number: 20808712.2
(22) Date of filing: 08.05.2020
(51) Int. Cl.: H02K 1/27, H02K 1/14, H02K 16/02

(54) **SYNCHRONOUS MACHINE WITH A SEGMENTED STATOR AND A MULTI-CONTOUR MAGNETIC SYSTEM BASED ON PERMANENT MAGNETS**

(30) Priority: 21.05.2019 RU 2019115638
(71) Applicant: Makhankov, Pavel, Krasnoyarsk, 660046 (RU)
(72) Inventor: Makhankov, Pavel, Krasnoyarsk, 660046 (RU)
(74) Representative: Jeck, Jonathan
(86) International application number: PCT/RU2020/050093
(87) International publication number: WO 2020/236035

(57) **Abstract**

The invention relates to electrical engineering and is intended for use in electric drives of autonomous electric or hybrid vehicles and robotic technology, as well as in electrical generating units. The technical result lies in the creation of an electric machine that provides energy efficiency, high torque and high fault tolerance. In the proposed invention, this is achieved by means of a segmented stator structure and a multi-contour magnetic rotor system. The segmented stator structure allows both poles of the cores to interact simultaneously with permanent magnets on annular supporting diameters of the rotor, and allows the control phases to operate independently. The multi-contour magnetic system provides for more efficient stator-rotor interaction, and makes it possible to obtain the necessary torque by the addition of magnetic contours that form a "nested" arrangement (an engine within an engine). The open (segmented) structure of the stator cores makes it possible to reduce electrical energy consumption.

## Description

### Field of the invention

The invention relates to electrical engineering and is intended for use in electric drives of electric or hybrid vehicles and robotic technology, as well as in electrical generating units.

### State of art

The analysis of the state of the art conducted by the applicant including search in patent scientific sources of information containing details about alternatives of the claimed invention revealed that the applicant found no alternative characterized by the features identical to all features of the claimed invention.

### Disclosure of the invention

Object of the invention is to create an energy-efficient, high-torque, fault-tolerant electrical machine for use in electric drives of electric or hybrid vehicles and robotic technology, as well as in electrical generating units.

The technical result is achieved by means of a design of a synchronous electrical machine with segmented stator and multi-contour magnetic system with permanent magnets comprising: a rotor consisting of two or more annular supporting diameters conditionally divided into external and internal ones connected to each other, with axially magnetized permanent magnets attached to them with alternating polarity, between which is a segmented stator made as inductance coils with cores switched into groups in a phase-by-phase manner, whereas cores of stator segments do not form a common magnet circuit. The number of poles on the internal and external annular supporting diameters of the rotor is the same, and the magnetic field of opposite permanent magnets of internal and external annular supporting diameters of the rotor is unidirectional. Cores of stator segments simultaneously interact by its both poles with permanent magnets located on the internal and external annular supporting diameters of the rotor. Stator segments of a single phase are switched so that each core of the same-phase segment is in the same position relative to poles of permanent magnets of both annular supporting diameters of the rotor taking into account their polarity.

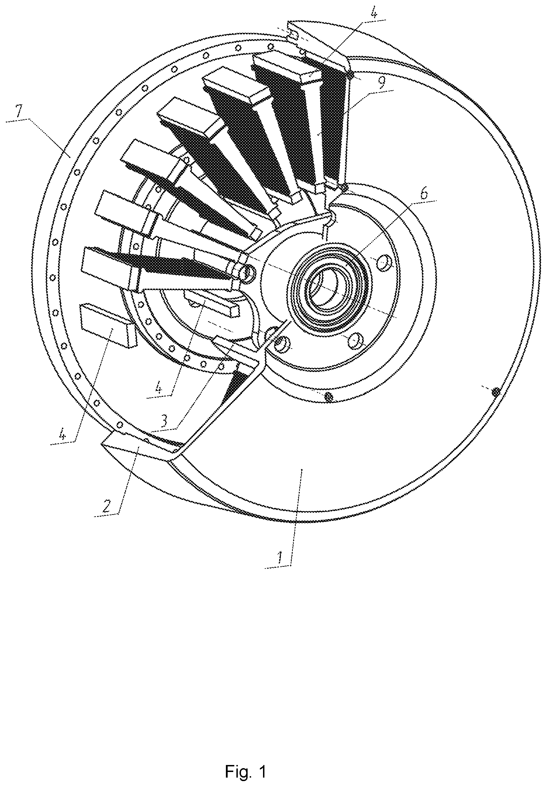

The novelty of the technical solution lies in the design of the stator, rotor and their interaction that allows organizing control over the electrical machine by sine voltage (frequency control) and current pulses, namely:
Short description of drawings based on the example of a synchronous electric machine with a two-contour magnetic system and segmented stator Figure 1 represents a general view (cross-section of the electric machine).

Figure 1 represents a stator segment with permanent magnets of annular supporting diameters of the rotor on its poles.

### Embodiment of the invention

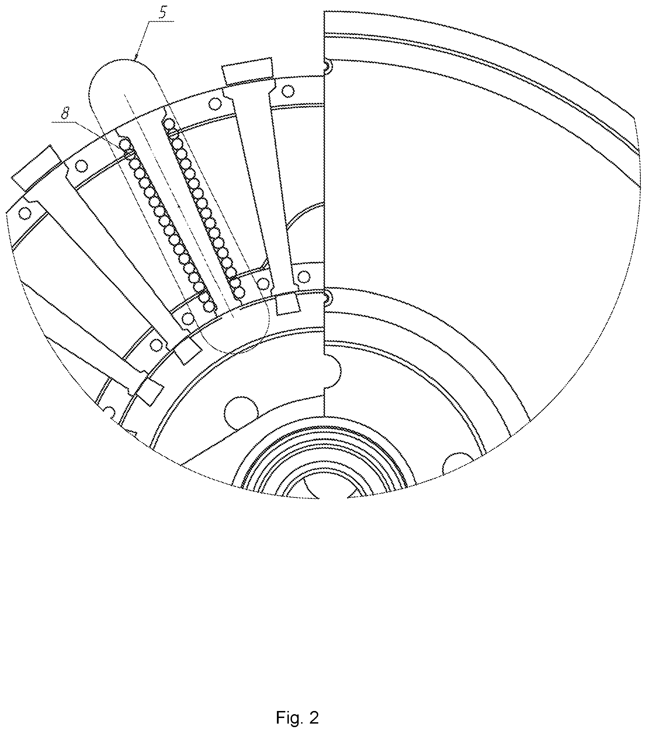

The synchronous eclectic machine with a segmented stator and two-contour magnetic system with permanent magnets comprises (see Figure 1) rotor 1 attached to hub block (bearing) 2 including two supporting annular diameter, internal 3 and external 4, interconnected by the rotor housing, with permanent magnets 5 connected to them, between which is a segmented stator (see Figure 2) made as inductance coils with cores 6 attached on the housing of electric machine 8.

Rotor 1 (see Figure 1) with annular supporting diameters 3 and 4 is made of a non-magnetic material permanent magnets 5 are axially magnetized and can have various characteristics (coercitive force, force of created magnetic induction, etc.) depending on the required result and application of the electric machine, winding 9 (see Figure 2) of segments of stator b (inductance coils) are made as a winding drive, the housing of electrical machine 8 is made of a non-magnetic material. Cores of segments of stator 7 are made of soft magnetic materials with low coercive force and narrow hysteresis loop, various magnetic permeability and saturation induction depending on the required remagnetizing frequency and created magnetic induction on poles.

In this manner, both core poles of each stator segment interact with permanent magnets of both annular supporting diameters of the rotor simultaneously under the push-pull principle, and rotor rotates by means of such interactions.

Non-closed, segmented structure of the stator magnetic circuit and synchronous interaction of permanent magnets of supporting annular diameters of the rotor with core poles of the same phase prevents untimely parasitic electromagnetic interactions between iron domains of neighboring stator core. This reduces iron heating of stator cores and increases the force of magnetic induction on their poles.

Simultaneous interaction of stator segments cores by both poles with permanent magnets of annular supporting diameters as compared to the classical single-contour magnetic system used in engine technology allows using electric machines in direct drives (without a gearbox). Depending on the torque requirements, the number of magnetic contours (annular supporting diameters with permanent magnets) is increased to the required number to form a "nested" arrangement (an engine within an engine).

Direct power generation occurs as follows:
When transmitting torque from an external source to rotor 1 (see Figure 1) through iron of cores 7 of segments of stator b located between permanent magnets 5 attached on opposite annular supportive diameters 3 and 4 of rotor 1, magnetic fluxes start circulating closing poles of permanent magnets via the iron of cores. In this manner, winding 9 of core 7 is located within a changing magnetic field formed by magnetic domains of the core with an oriented flux of magnetic induction. These magnetic fluxes induce currents in conductors of windings 9 of segments of stator b (inductance coils), which flow in direction according to the Lenz rule to form alternating voltage.

The result of these novelty elements is improved efficiency of power generation by means of increasing the density of the circulating magnetic flow having a clearly oriented direction filling the entire body of the stator segment core increasing formation of electromagnetic induction in conductors of stator core windings, whereas there is no parasitic interaction between iron domains of stator segments due to non-closed structure of the stator magnetic circuit (segmented stator structure).

### Structural disadvantages of electric machine

A disadvantage of the electric machine is limitations caused by properties of permanent magnets, torque pulsation and no free rotor rotation, e.g., magnetic sticking effects, which requires idle voltage to be supplied to control phases to eliminate it or use non-magnetic materials for manufacturing stator segment cores.

In this manner, the technical result of the invention allows arranging a highly efficient and fault-resistant operation mode of a synchronous electric machine, namely to reduce energy consumption by reducing losses in the non-closed structure of the stator magnetic circuit, to increase power generation by more efficient direct power generation, to increase magnetic design efficient by means of simultaneous interaction of the stator segment core by both poles with permanent magnets of the rotor, to increase fault resistance by means of a segmented structure of the stator and isolated control of each phase, and to obtain the required torque on the rotor by using a multi-contour magnetic system.

## Claims

1. synchronous electric machine with a segmented stator and multi-contour magnetic system with permanent magnets comprises a rotor consisting of two and more annular supporting diameters (external and internal) connected between each other with axially magnetized permanent magnets attached to them with alternating polarity, between which is a segmented stator made as inductance coils with cores switched into groups in a phase-by-phase manner, while the cores of the stator segments do not form a common magnetic circuit, the number of magnets on the internal and external annular supporting diameter is the same, and the magnetic field of opposite magnets of the internal and external annular supporting diameters is unidirectional, stator segments cores simultaneously interact by its poles with permanent magnets located the internal and external annular supporting diameters, the segments of one phase are commuted so that each core of the segment of one phase is in the same position relative to the opposite permanent magnets of the annular reference diameters of the rotor, taking into account their polarity.
